(19) Europäisches Patentamt

European Patent Office

Office européen des brevets

(11) **EP 1 376 276 B1**

(12) **EUROPEAN PATENT SPECIFICATION**

(45) Date of publication and mention
of the grant of the patent:
**27.09.2006 Bulletin 2006/39**

(51) Int Cl.:
*G05B 13/02* (2006.01)     *C02F 3/02* (2006.01)

(21) Application number: **02258239.9**

(22) Date of filing: **29.11.2002**

(54) **An AI based control system and method for treating sewage/waste water by means of a neural network and a back-propagation algorithm**

Ein auf künstlicher Intelligenz basierendes Regelungssystem und Verfahren zur Abwasseraufbereitung mittels neuronalem Netz und einem Back-Propagation Algorithmus

Système de commande et procédé basé sur l'intelligence artificielle pour traiter des eaux usées avec un réseau neuronal à rétropropagation

(84) Designated Contracting States:
**AT BE BG CH CY CZ DE DK EE ES FI FR GB GR IE IT LI LU MC NL PT SE SK TR**

(30) Priority: **21.06.2002 KR 2002034788**

(43) Date of publication of application:
**02.01.2004 Bulletin 2004/01**

(73) Proprietor: **H2L Co., Ltd
Aanyang-City,
Kyunki-Do (KR)**

(72) Inventor: **Yang, Ik-Bae
Aanyang-City, Kyunki-Do (KR)**

(74) Representative: **Daniels, Jeffrey Nicholas et al
Page White & Farrer
54 Doughty Street
London WC1N 2LS (GB)**

(56) References cited:
**DE-A- 19 914 277**

• **COTE M ET AL: "Dynamic modelling of the activated sludge process: improving prediction using neural networks", WATER RESEARCH, ELSEVIER SCIENCE PUBLISHERS, AMSTERDAM, NL, VOL. 29, NR. 4, PAGE(S) 995-1004 XP004035362 ISSN: 0043-1354 * page 997 - page 1000 ***

• **BHAT N ET AL: "USE OF NEURAL NETS FOR DYNAMIC MODELING AND CONTROL OF CHEMICAL PROCESS SYSTEMS", PROCEEDINGS OF THE AMERICAN CONTROL CONFERENCE. PITTSBURGH, JUNE 21 - 23, 1989, NEW YORK, IEEE, US, VOL. VOL. 2 CONF. 8, PAGE(S) 1342-1347 XP000088550 * page 1342 - page 1345 ***

• **PIRSING A: "FUZZY LOGIC AND NEURAL NETWORKS IN WASTE WATER PURIFICATION", ENGINEERING AND AUTOMATION, SIEMENS AKTIENGESELLSCHAFT, BERLIN, DE, VOL. 19, NR. 3, PAGE(S) 25-27 XP000724228 ISSN: 0939-2068 * page 26 - page 27 ***

• **MINDERMAN P A ET AL: "NEURAL NET MODELING AND CONTROL OF A MUNICIPAL WASTE WATER PROCESS", PROCEEDINGS OF THE AMERICAN CONTROL CONFERENCE. SAN FRANCISCO, JUNE 2 - 4, 1993, NEW YORK, IEEE, US, VOL. VOL. 2, PAGE(S) 1480-1484 XP000411110 * page 1480 - page 1482 ***

• **PATENT ABSTRACTS OF JAPAN vol. 1995, no. 03, 28 April 1995 (1995-04-28) & JP 06 335694 A (MEIDENSHA CORP), 6 December 1994 (1994-12-06)**

**Description**

**Background of the Invention**

**Field of the Invention**

This invention is relating to an AI (artificial intelligence) control system for controlling automatically variable factors, such as DO (dissolved oxygen), SRT (solids retention time) and the like depending upon properties of the inflow water, the internal condition of the reaction tank and the target treated water quality, particularly the AI control system wherein a retention time is applied in consideration of each volume of the reaction tank and the sedimentation tank, which is a fixed factor applied to the initial design, and thereby, each SP (set point), such as each DO and SRT of the 1st story and the 2nd story of the exhalation tank is obtained from the data collected by measuring automatically BOD (biological oxygen demand), an incoming stream flow and a water temperature, which are fluid design factors and flowing into the waste water treatment plant through the combined sewer featuring the sewerage system in Korea, and also the most appropriate knowledge-base is built up by collecting the existing expertise (i.e., BOD, a temperature and a stream flow as inflow attributes, DO and MLSS (mixed liquor suspended solids) as attributes of the reaction tank, SRT as a design factor, and a concentration of T-N (total nitrogen) and BOD as attributes of the treated water) in the manner to control automatically a control valve (C/V) for controlling the supply air and a pump for drawing sludge through each PV (present value), and then a learning method and an algorithm for controlling the surplus sludge and the like are used by letting AI (corresponding to the neural network controller) learn through the use of the said knowledge-base, setting a concentration of DO in response to any change in a temperature and a concentration and calculating an appropriate SRT, and this AI control learning method is applicable to most sewage treatment plants by means of re-learning and tuning in which some modifications and new data are used, regardless of any difference in the construction method thereof and any change in the capacity and the flow of the sewage treatment plant, and tuning by means of new data as accumulated is available for new and better efficiency thereof

**Description of the Prior Art**

In the conventional automatic control system for the sewage/waste water treatment plant, each SP is set depending upon the operator's experience in consideration of a seasonal difference in the temperature, BOD and a stream flow of the incoming water and the like, and the PID (proportional integral differential) and ON/OFF control system is mainly used according thereto. Wherein, the operator changes each SP of DO and SRT every several days for controlling the plant by judging from daily data comprehensively.

For example, in the automatic control system using the most commercialized PLC (programmable logic controller), data obtained from each measuring instrument, such as BOD, an incoming stream flow and a water temperature as attributes of the inflow water, and each DO of the 1st story and the 2nd story of the exhalation tank, MLSS of the aeration tank, a concentration of sludge, a drawn stream flow and BOD of the outflow water for controlling each SP, are transmitted to PLC;

And then, data obtained from the input/output cards of PLC (A/D card, D/A card, respectively) are operation-processed and PID and ON/OFF-controlled through CPU having an execution speed for a small capacity, which is built in PLC, and further data inputted into/outputted from PLC are transmitted to the computer through the interface in the RS-232C communication signals.

Then, the computer simply executes only the function to convert data inputted into/outputted from PLC into data of a physical quantity, which can be identified visually, display, save and control them.

The automatic control system adopting the said method is simple, but it has difficulty in controlling DO and SRT by means of consecutive SPs depending upon fluid properties of the inflow water and moreover, it is difficult to control each SP by applying any changes taking place from time to time, every day and every season, relying upon the operator's intuition. Moreover, with the said system, it is impossible to control each SP consecutively as a method to enhance the efficiency of treating sewage/waste water, and besides, when the operator is absent due to his business travel or replaced, it is very difficult to maintain the existing treatment efficiency or enhance the treatment efficiency

COTE M ET AL: "Dynamic modelling of the activated sludge process: improving the prediction using neural networks", WATER RESEARCH, ELSEVIER SCIENCE PUBLISHERS, AMSTERDAM NL VOL. 29, NR. 4, PAGES 995-1004 discloses a procedure to improve the accuracy of an existing mechanistic model of the activated sludge process. As a first step, optimising of the numerous model parameters has been investigated using the down hill simplex method in order to minimise the sum of the squares of the errors between predicted and experimental values of approximate variables. Optimisation of various sets of parameters has shown that the accuracy of the mechanistic model, especially on the prediction of the dissolved oxygen in the mixed liquor can be easily improved by adjusting only the variables of the overall oxygen transfer coefficient X1a. In a second step, neural network models have been used successfully to predict the remaining errors of the optimised mechanistic models. The coupling of the mechanistic model with neural network models results in a hybrid model yielding accurate simultations of 5 key variables of the active sludge process.

BHAT N ET AL: "USE OF NEURAL NETS FOR DYNAMIC MODELLING AND CONTROL OF CHEMICAL PROCESS SYSTEMS", PROCEEDINGS OF THE AMERICAN CONTROL CONFERENCE PITTSBURGH, JUNE 21-23, 1989, NEW YORK, IEEE, US, VOL. 2 CONFERENCE 8, PAGES 1342-1347 discloses the use of back propagation neural nets for dynamic modelling and control of chemical process systems. The back propagation algorithm and its rational are reviewed and the algorithm is applied successfully to model the dynamic response of PhNaCstr.

PIRSING A: "FUZZY LOGIC AND NEURAL NETWORKS IN WASTE WATER PURIFICATION", ENGINEERING AND AUTOMATION, SIEMENS AKTIENGESELLSCHAFT, BERLIN, DE VOL. 19 NR. 3, PAGES 25-27 discloses fuzzy logic applications and neural networks and their potential applications in the field of water works.

MINDERMAN P A ET AL: "NEURAL NET MODELLING AND CONTROL OF A MUNICIPAL WASTE WATER PROCESS", PROCEEDINGS OF THE AMERICAN CONTROL CONFERENCE SAN FRANCISCO, JUNE 2-4, 1993, NEW YORK, 1EEE US, VOL. 2, PAGES 1480-1484 discloses the initial steps of using model protective control as a means of improving product quality and reducing energy costs. In the first step the basic control and data acquisition systems were upgraded. In a second step experimental data was collected to build-up a process model.

PATENT ABSTRACTS OF JAPAN Vol. 1995, No. 3, 28th April 1995 and JP 06335694A (MEIDENSHA CORP) 6th December 1994 discloses a controller of a device for biologically treating waste water.

## Summary of the Invention

For solving the said technical problems with the prior art, this invention is to derive any correlation and determine operation factors depending upon seasonal changes by using the existing data, not relying on heuristic knowledge and thereby control DO and SRT for embodying the control method to enhance the treatment efficiency and the seasonal operation control. Also, this invention is to remove the factors causing the operation cost including the labor cost, the power charge, etc. to be increased due to a low efficiency of controlling operation.

This invention for accomplishing the said objectives is characterized in the method for controlling treatment of the sewage/waste water by comprising a step in which attributes of the inflow water flowing into the sewage/waste water treatment plant, attributes of the internal condition of the reaction tank and fluid PVs of efficiency attributes of the outflow water are complexly measured; a step in which data of the measured fluid PVs as above said are collected and operation-processed to convert them into data of a physical quantity in the computer; a step in which each optimum SP of each DO and SRT of the 1st story and the 2nd story of the exhalation tank is obtained by comparing PVs of the measured attributes as above said by means of the application program in the said computer; a step in which each obtained optimum SP is operation-processed to convert it into each analog and digital control output value by comparing each obtained optimum SP with each PV of each DO and SRT of the 1st story and the 2nd story of the exhalation tank; and a step in which each air control valve of the 1st story and the 2nd story of the exhalation tank and the pump for drawing sludge are controlled by each obtained control output value as above said, and by the fact that the said application program obtains each said optimum SP by means of the neural network control program using the back-propagation algorithm.

This invention is also characterized in the system for controlling treatment of the sewage/waste water by comprising a step in which attributes of the inflow water flowing into the sewage/waste water treatment plant, attributes of the internal condition of the reaction tank and fluid PVs of efficiency attributes of the outflow water are complexly measured; a step in which data of the measured fluid PVs as above said are collected and operation-processed to convert them into data of a physical quantity in the computer; a step in which each optimum SP of each DO and SRT of the 1st story and the 2nd story of the exhalation tank is obtained by comparing PVs of the measured attributes as above said by means of the application program in the said computer; each obtained optimum SP is operation-processed to convert it into the analog and digital control output value by comparing each obtained optimum SP with each PV of each DO and SRT of the 1st story and the 2nd story of the exhalation tank; and a step in which each air control valve of the 1st story and the 2nd story of the exhalation tank and the pump for drawing sludge are controlled by using each obtained control output value as above said, and by the fact that the said application program obtains each said optimum SP by means of the neural network control program using the back-propagation algorithm.

## Brief Description of Drawings

Fig. 1 is a block diagram illustrating the constitution of the AI control system using the programmable logic controller according to this invention.

Fig. 2 is a flow chart of the AI control system using the programmable logic controller according to this invention.

Fig. 3 is a flow chart showing execution of main functions of the program used in this invention.

Fig. 4 is a flow chart showing execution of the learning function of the neural network used in this invention.

Fig. 5 is a drawing illustrating the system of the back-propagation algorithm used in this invention.

Fig. 6 is a block diagram showing execution of the controlling function of the subject system used in this invention.

Fig. 7 is the AI learning program adopted by the subject system.

Fig. 8 is the heuristic data applied to the subject system.

Fig. 9 is a graph of inflow temperature signals inputted to the subject system.

Fig. 10 is a graph of incoming stream flow signals inputted to the subject system.

Fig. 11 is a graph of inflow BOD signals inputted to the subject system.

Fig. 12 is a graph of volume load signals inputted to the subject system.

Fig. 13 is a graph of DO 1 output signals outputted from the subject system.

Fig. 14 is a graph of DO 2 output signals outputted from the subject system.

Fig. 15 is a graph of SRT output signals outputted from the subject system.

Fig. 16 is a graph of overall output signals inputted to/outputted from the subjet system.

## Detailed Description of the Preferred Embodiment

The constitution of this invention is below described in details by reference to the accompanying drawings.

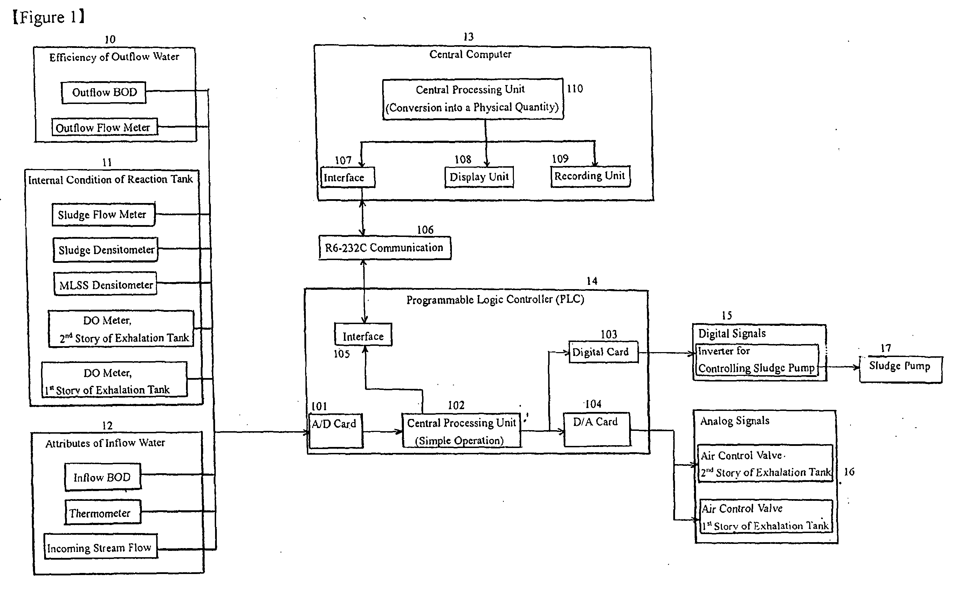

Fig. 1 shows the overall constitution of the AI control system according to this invention. As shown in such constitution, data obtained from each measuring instrument (10, 11, 12), such as BOD, an incoming stream flow and a water temperature as attributes of the inflow water, and each DO of the 1st story and the 2nd story of the exhalation tank, MLSS of the aeration tank, a concentration of sludge, a drawn stream flow and BOD of the outflow water for controlling each SP, are transmitted to A/D card (101) of PLC (14) in analog signals.

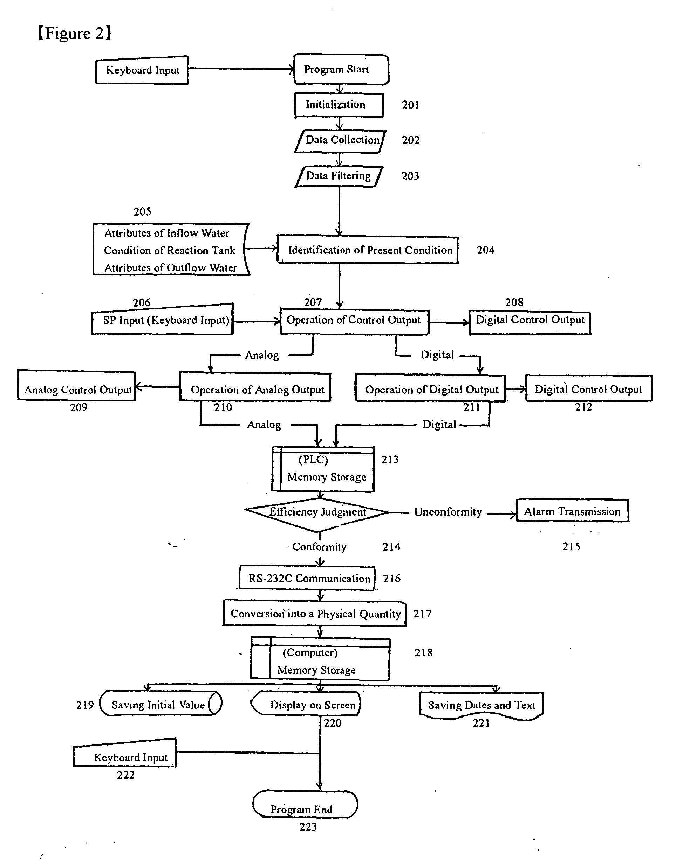

Such data gets to constitute the system steps according to the flow chart as shown in Fig. 2. First, the program starts and it is initialized (201); then the existing data are collected (202); the data are filtered (203); attributes of the inflow water, the internal condition of the reaction tank and the outflow water as measured are inputted to PLC (205); and the current condition is identified (204). Then, each identified PV and each SP input value (206) are operation-processed (207, 210, 211) for control output and then control-outputted (209, 212) in analog and digital signals respectively, and at the same time saved (218) in the memory of PLC (14). Then, in case the data are judged to be in conformity with the criteria for efficiency (214), the data is operation-processed to convert them into the data of a physical quantity through the moving average process (217), and then the data are saved by dates (221) and each initial value is saved (219). Further, the data are bi-directionally communicated by means of TCP/IP (transmission control protocol/internet protocol) through RS232C communication means (106) as shown in Fig. 1 so that they are displayed on the monitor screen of the computer set (220).

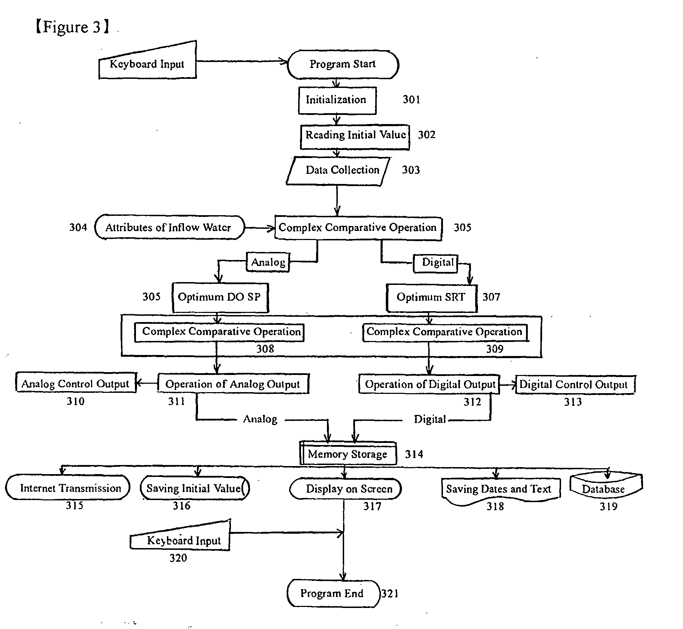

Fig. 3 is a flow chart showing execution of main functions of the program used in this invention. The said program starts and it is initialized (301), and then the collected data (303) and the data of a physical quantity as converted depending upon attributes (304) of the inflow water are complexly and comparatively operation-processed (305). Through such complex and comparative operation process, each SP (306, 307) of each DO and SRT of the 1st story and the 2nd story of the exhalation tank is obtained, which enables denitrification and dephosphorization of the inflow water to be made at a given concentration or more, regardless of attributes of the inflow water, including a temperature, a stream flow, etc.; the stabilized water treatment system of a high efficiency to be built up by making the water treatment process equipped with the AI system and the automation system; the consistency and the safety of each measuring instrument and the stability of the automatic control system required for automation to be secured by building up the database and controlling AI (corresponding to the neural network); the treatment efficiency to be enhanced regardless of any seasonal temperature or any concentration of the inflow water.

Wherein, each obtained optimum SP of each DO and SRT of the 1st story and the 2nd story of the exhalation tank is complexly and comparatively operation-processed (308, 309), and it is operation-processed for analog output (311) and digital output (312) respectively to do each analog control output (310) and digital control output (313). Then, each control output is saved in the memory (314), and it is used for transmission on Internet (315), saving of each initial value (316), display on the monitor screen (317), saving of a text by dates (318) or registration in database (319).

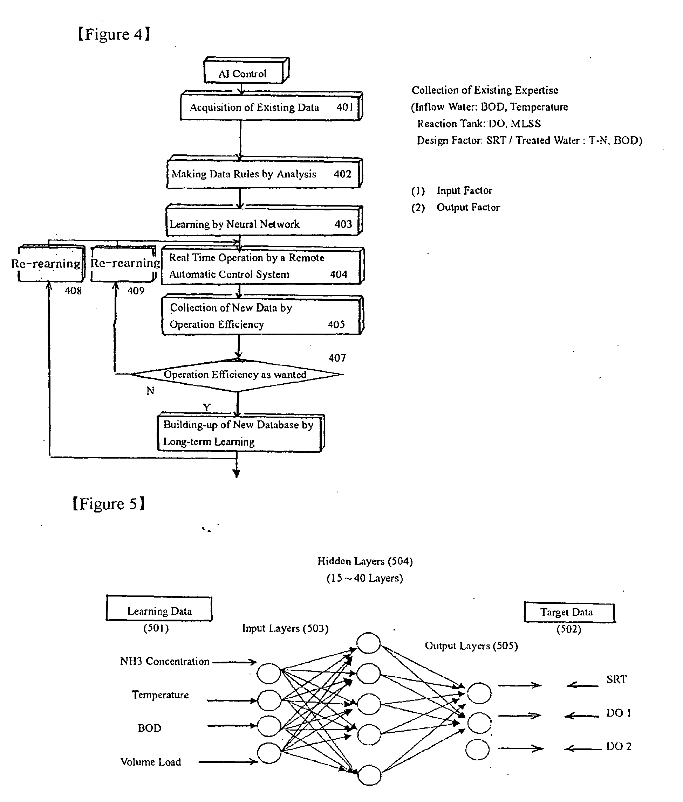

The overall learning and application process as used herein is illustrated in Fig. 4.

The AI control process collects and acquires expertise data, such as BOD of the inflow water, DO and MLSS of the reaction tank and concentration of T-N and BOD of the treated water (401) and further makes data rules by analyzing such data (402).

Such data rules are learned by means of the neural network (403), which uses the back-propagation algorithm and the learning optimization algorithm in which the Levenberg-Marquardt method, the Newton method and the steepest descent method are available, as shown in Mathematical Formula 1. Further, the neural network calculates the operation efficiency after the actual operation of the plant, and then a short term tuning (407) is done until the wanted efficiency is reached on the basis of new data of a high efficiency as acquired (405). Through this re-learning process, a new database is built up (406).

【Mathematical Formula 1】

$$w_{i+1} = w_i - (H + \lambda I)^{-1} \nabla F(w_i)$$

(I means "Identity Matrix". $\lambda = 0$ : Newton Method, $\lambda \to \infty$: Steepest Descent Method. $\lambda$ is dynamically adjusted.)

In the said back-propagation algorithm, properties of the inflow water (a stream flow, a temperature, BOD), internal condition of the reaction tank (volume load, SRT, DO, MLSS, a concentration of ammonia nitrogen ($NH_4$-N), a concentration of nitrate nitrogen ($NO_3$-N), a concentration of phosphorate-phosphorus ($PO_4$-P) and the treated water quality (BOD, T-N) are used as data for an input learning, and the target data one-to-one corresponding to this input data are each DO and SRT of the 1st story and the 2nd story of the exhalation tank.

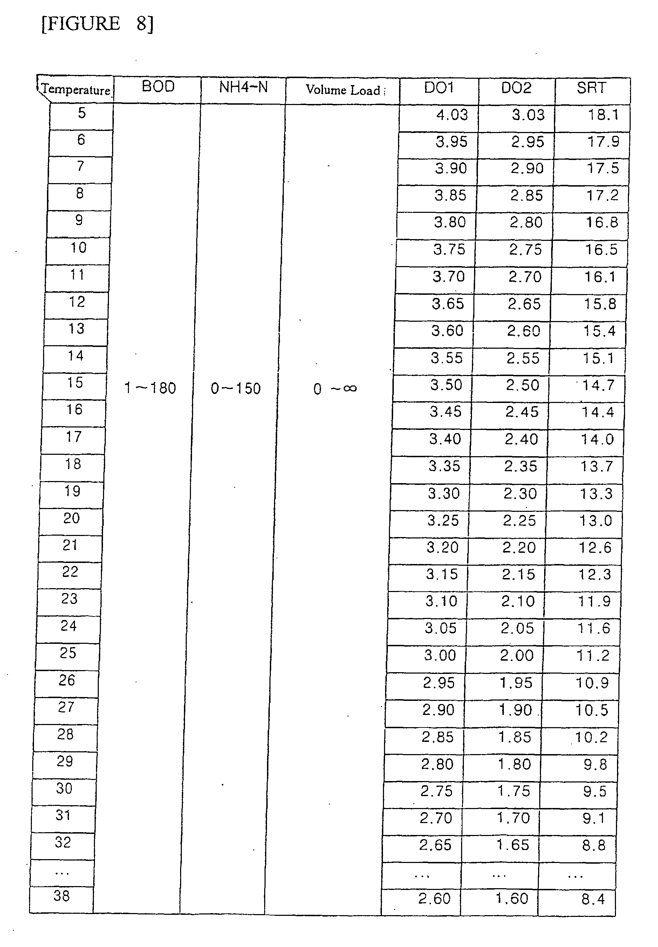

Fig. 8 illustrates such data for the input learning. As illustrated in Fig. 8, data for the input learning can be inputted in the following range; temperature: 5 degrees above zero ~ 38 degrees above zero, BOD: 0 ~ 180 mg/$\ell$, $NH_4$: 0~150 mg/$\ell$, and volume load: the entire range. And the output data corresponding thereto are outputted in the following range; DO of the 1st story of the exhalation tank: 2.35 ~ 4.3 mg/$\ell$ , DO of the 2nd story of the exhalation tank: 1.4 ~ 3.3 mg/$\ell$ , and SRT: 7.55 ~ 21.0 days.

The said learning data represent the following controls: When the concentration of the inflow $NH_4$ is increased, the control system is to increase MLSS to decrease the food to microbes ratio (F/M). Or when the concentration of the inflow $NH_4$ is decreased, the control system is to decrease MLSS to increase F/M. Also, when the concentration of the inflow water (BOD) is increased and MLSS is also increased, the control system is to decrease MLSS to maintain F/M. However, when MLSS is decreased, the control system is to decrease a drawing amount of surplus sludge, maintaining F/M. And, when the concentration of the inflow water (BOD) is increased, the control system is to increase the air supply. However, when the concentration of the inflow water (BOD) is decreased, the control system is to decrease the air supply and at the same time increase the drawing amount of surplus sludge to decrease MLSS.

Fig. 5 illustrates a system of the back-propagation algorithm used in this invention.

In this invention, MLP (Multi-Layer Perception) model of the back-propagation is used. Layers of MLP model comprises an input layer (503) receiving any input from the environment, an output layer (505) transmitting any output to the environment and a hidden layer (504) existing between the input layer and the output layer and not interacting directly with the environment. The learning starts from the input layer and progresses to the output layer through the hidden layer. In case the neuron sums the values of the received inputs and the summed value is high, it passes the inputs to the next node in the hidden layer.

When the inputs are passed, a weight is allocated, or a weight is enhanced or attenuated. This process continues until the model reaches the final outer layer (output layer) to forecast any result. Wherein, the activator action to add relative importance to a pattern of a high value and ignore a pattern of a low value takes place.

In this invention, only the linear sum is used as an active function since various SPs have to be forecasted in the output layer (505) and outputted from it.

Meanwhile, a non-linear active function is used in the hidden layer (504), and the AI control (neural network) accumulates the information acquired in the learning process in the weight. This weight is used to acquire each optimum value of SRT and DO.

The number of hidden layers (504) in this invention, as shown in Fig. 5, has been determined according to the expertise. In this invention, the number of hidden layers (504) is determinable in the range of 15 ~ 40. The data input from the input layer (503) to the hidden layer (504), the data output from the hidden layer (504) to the output layer (505) and the weight are determined by means of Mathematical Formula 2 to 4.

【Mathematical Formula 2】

$$\nabla F(w_i) = \frac{\partial F}{\partial w_i}$$

(This is a formula to calculate F summing the entire error by a rate of change against the weight. Gradient "i" is the "i"th weight.)

【Mathematical Formula 3】

$$F = \sum_{k=0}^{N} e_k^2 \qquad : \text{SSE (square-sum error)}$$

(error "e" means a difference between SP and the output from the neural network. "k" is the "k"th sample.)

【Mathematical Formula 4】

$$H = \nabla^2 F(w)$$

(Hessian matrix means that the second order derivative is obtained against the weight of F)

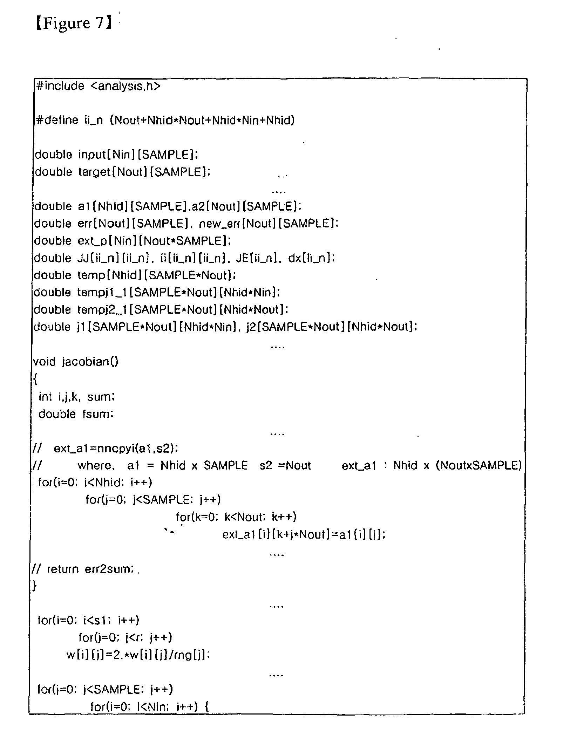

Then, each optimum SP obtained in the foregoing step is compared with PV of DO of the 1st story of the exhalation tank and PV of DO of the 2nd story of the exhalation tank, and thereby, it is operation-processed for the analog control output (hereinafter referred to as MV) to obtain a control factor. Also, PV of the stream flow of drawn sludge is compared with the mass stream flow, and thereby, the digital MV is operation-processed to obtain a digital control factor. Fig. 7 illustrates an example of the software embodied in the program language to obtain such control factors.

Also, this invention saves a set of data obtained in the foregoing step in one file and retrieves them from it, enabling the data control to be facilitated.

After the foregoing step, MV is consecutively calculated by means of each control factor and it is transmitted in analog signals and digital signals through D/A card (104).

The PC-based direct control is conducted on the transmitted signals through each C/V and the inverter (15) of the pump for drawing sludge.

Also, after the foregoing step, each SP and PV of the internal condition of the reaction tank are mutually compared, and thereby, the efficiency of the sewage/waste water treatment plant completing the said control process is comparatively analyzed and the analysis result can be recorded in a file.

Further, any consecutive control can be conducted through a certain tuning process of control factors as a method for enhancing the treatment efficiency, and a series of process for building up a remote AI control system to monitor and control the field data real time can be also conducted.

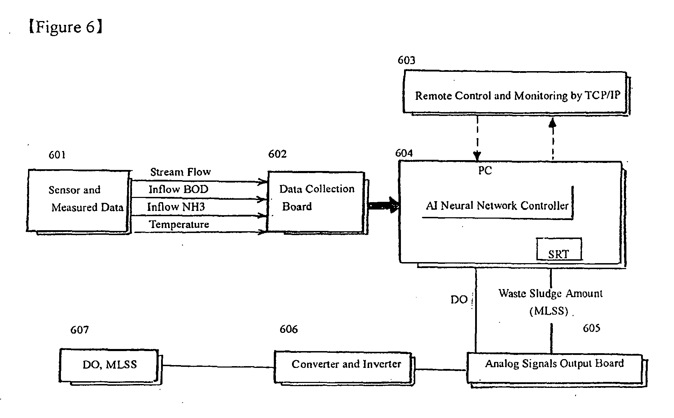

Fig. 6 is a block diagram showing execution of the controlling function of the system used in this invention.

As illustrated in Fig. 6, data (601), such as stream flow, an inflow BOD, an inflow NH3 and a temperature, sensed or measured in the sensor are collected in the data collection board (602), and such collected data are transmitted to a computer (604), such as PC having the AI neural network controller equipped therewith. This computer enables a remote control and a monitoring work to be conducted bi-directionally and real time by means of TCP/IP (603). DO and SRT as outputted through the said AI neural network control are outputted through the analog output signal board (605). This analog signal can be converted through the converter and the inverter (606), and then it gets to control DO and MLSS (607).

An example of embodying the foregoing constitution of this invention is below reviewed through input/output data.

This example represents an example of operating the experimental facilities for the treated water of the 1st sedimentation basin of the Environment Affairs Office, of which a daily treatment capacity is 50 ton and which is equipped with the AI control system for treating the sewage/waste water by means of the neural network and the back-propagation algorithm according to this invention.

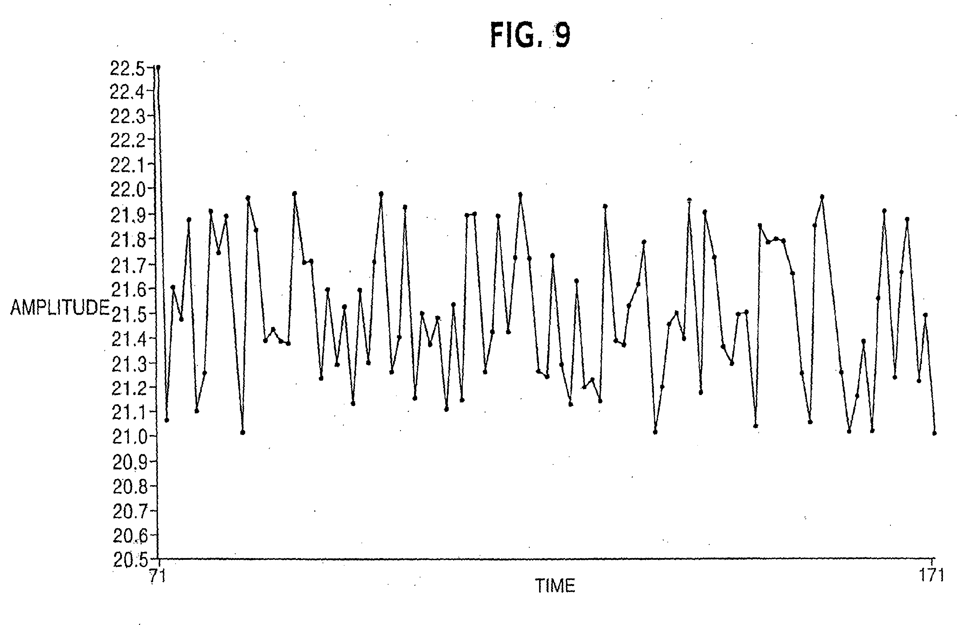

Fig. 9 to Fig. 12 shows inputs indicating the condition of the inflow water and the internal condition of the reaction tank in this example.

Fig. 9 is a graph of inflow temperature signals inputted to the system according to this invention. Wherein, the x-axis is a time axis, and the inflow temperature is fluidly inputted in the range of 21.0 °C to 21.5 °C.

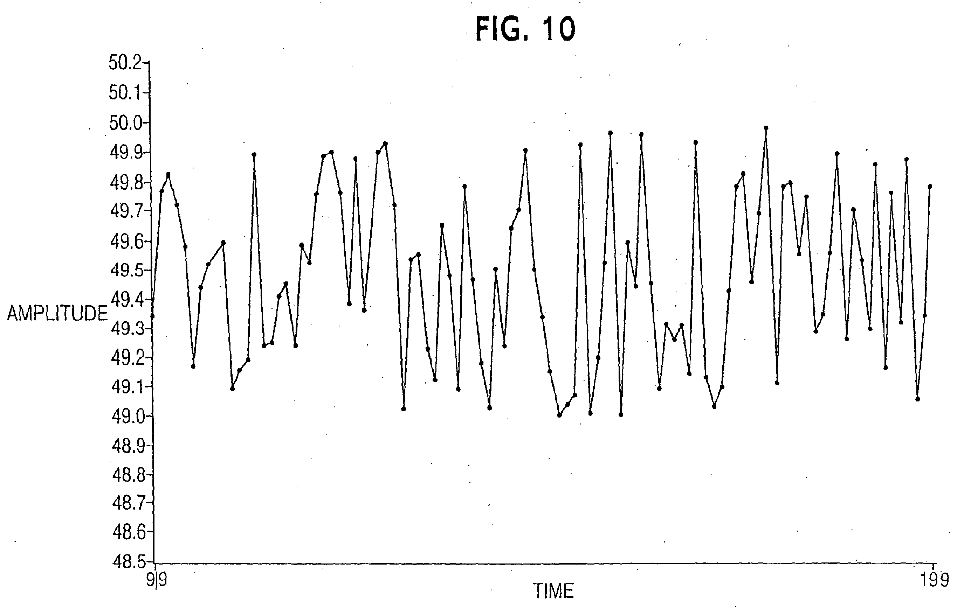

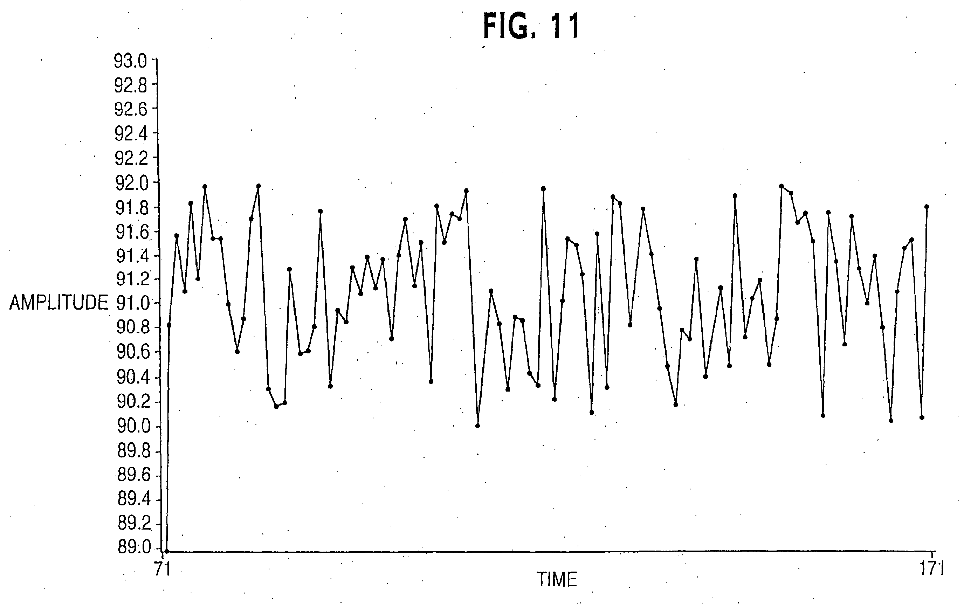

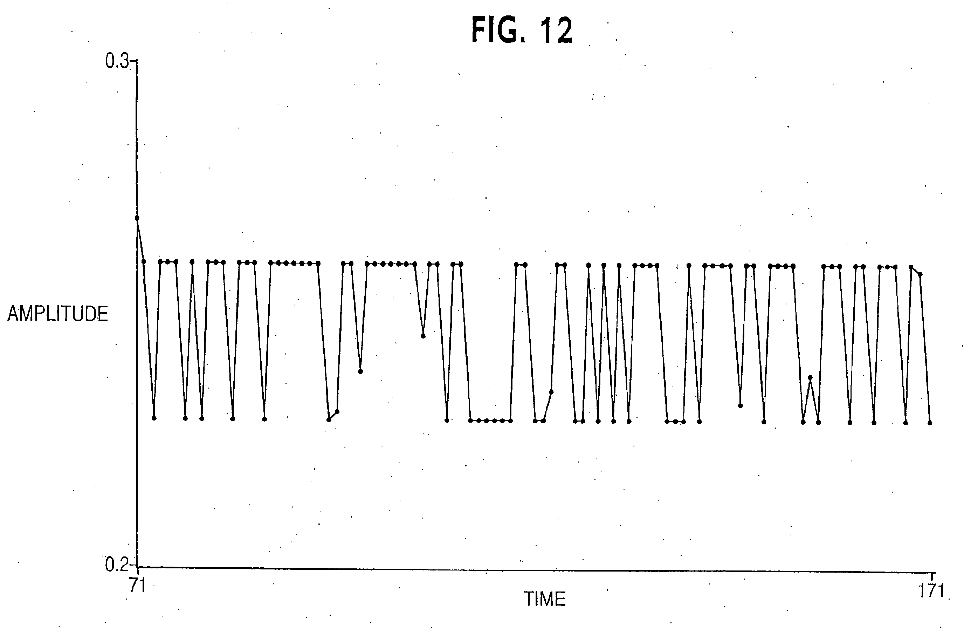

Fig. 10 is a graph of incoming stream flow signals inputted to the system according to this invention. Wherein, the incoming stream flow is fluidly inputted in the range of about 49.0 to 50.0 $m^3$/day over time. Fig. 11 is a graph of inflow BOD signals inputted to the system according to this invention. Wherein, the inflow BOD is fluidly inputted in the range of about 90.0 to 92.2 mg/$\ell$ over time. Fig. 12 is volume load signals inputted to the system according to this invention. Wherein, the volume load (kg BOD/$m^3$.day) in the reaction tank is fluidly inputted over time.

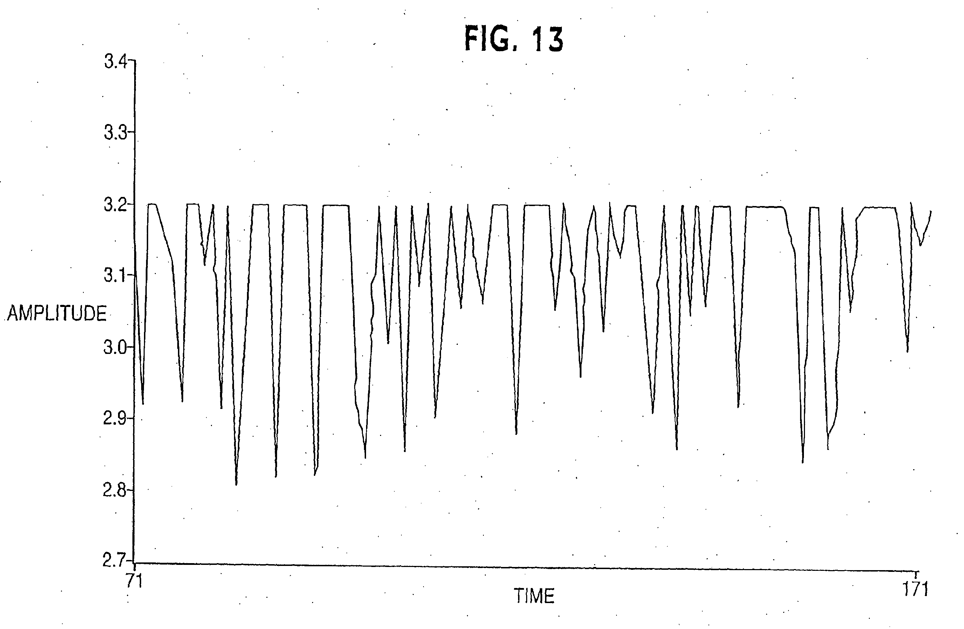

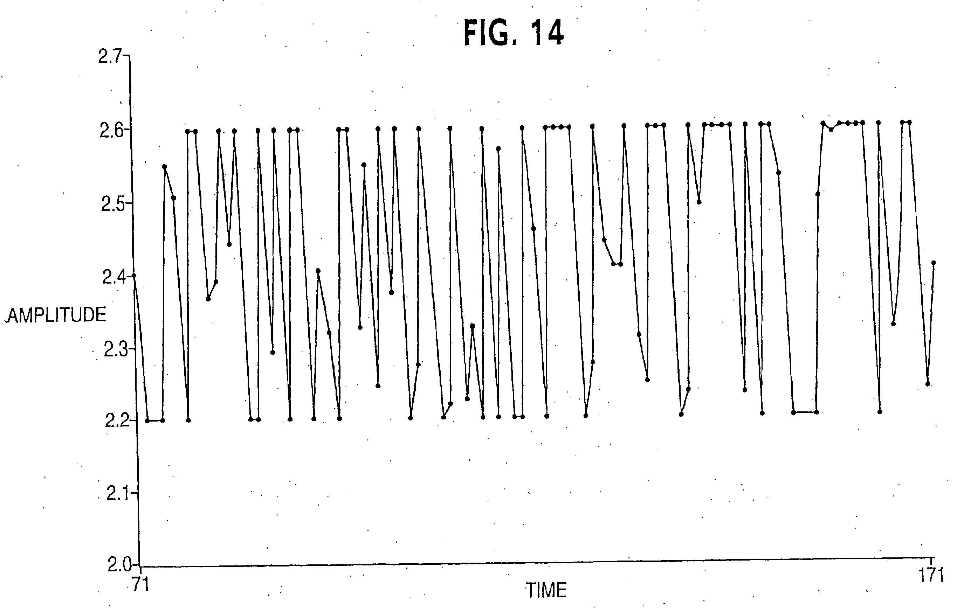

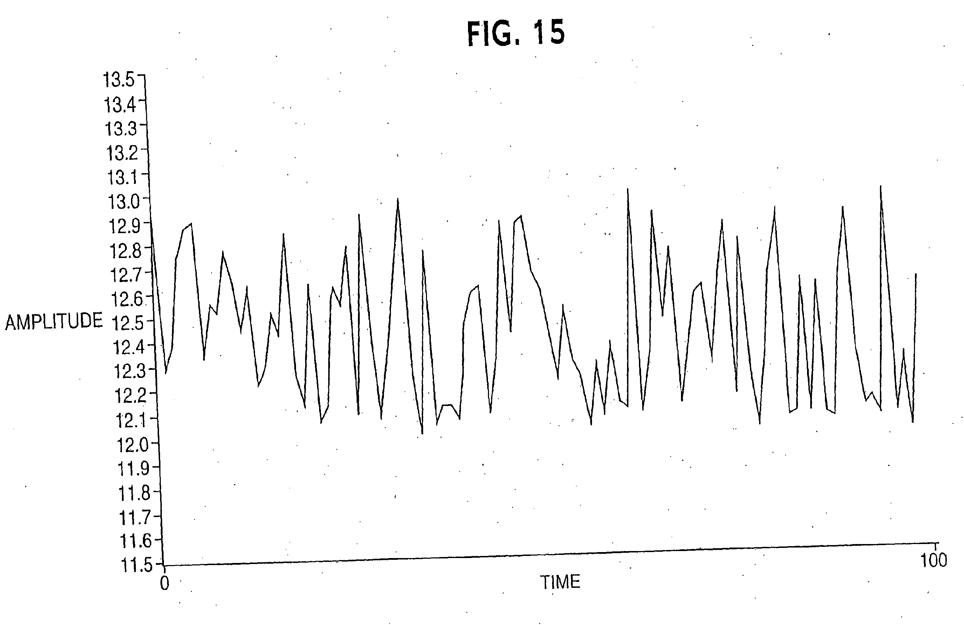

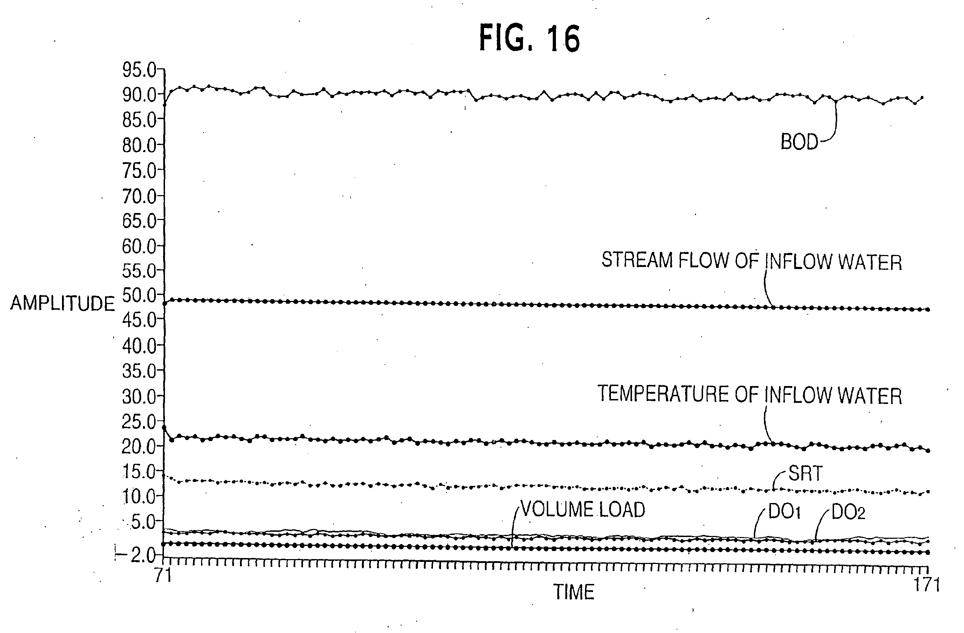

Fig. 13 is a graph of DO 1 output signals outputted from the system according to this invention. Fig. 14 is a graph of DO 2 output signals outputted from the system according to this invention. Fig. 15 is a graph of SRT output signals outputted from the system according to this invention. Fig. 16 is a graph of overall output signals inputted to/ outputted from the system according to this invention.

It can be observed in the output graphs of this example that each DO of the 1st story (Fig. 13) and the 2nd story (Fig. 14) of the exhalation tank and SRT (Fig. 15) thereof in the reaction tank are controlled so that it may not be at any fixed value but at any appropriate condition for each situation in response to each corresponding inflow condition by AI.

Like this, the AI control system used in this invention enables any wrong operation to be minimized, and further consistent and reliable data to be secured and a precise control to be made.

By the constitution as above described, this invention, unlike the prior art, enables a stable treatment efficiency to be secured without depending upon the experience of the operator by doing the AI control through the standardized process using the more standardized data, further reliable data according to a demand in the advanced industrialized and information-intensive era to be secured and the labor cost and the maintenance cost in the operation budget to be minimized.

Also, since the operation speed and the flexible technology of PC are reflected in this invention through the PC-based control, it is possible to support for enhancing the treatment efficiency continuously.

**Claims**

1. A method for controlling treatment of sewage/waste water in a sewage/waste water treatment plant comprising an exhalation tank in which a neural network (403) control program using a back-propagation algorithm in a computer is applied for deriving a optimum set point (SP) value and air in exhalation tank and a sludge drawing pump are controlled, wherein the method comprises:

   a step in which present values of attributes of inflow water (304) flowing into the sewage/waste water treatment plant, attributes of internal condition of a reaction tank, and fluid present values of efficiency attributes of outflow water are measured;
   a step in which the measured present values are collected and converted into physical data to be processed in the computer;
   a step in which each optimum set point of each dissolved oxygen and sludge retention time of 1st storey and 2nd storey of the exhalation tank are obtained by comparing the present values of the measured attributes as above said by means of an application program in the computer, the application program obtaining each said optimum set point (306,307) by means of the neural network (403) control program using the back-propagation algorithm;
   a step in which each obtained optimum set point is operationally processed to produce analog (310) and digital (313) control output value by comparing each obtained optimum set point (306,307) with each present value of each dissolved oxygen and sludge retention time of the 1st storey and 2nd storey of the exhalation tank; and
   a step in which each air control valve of the 1st storey and 2nd storey of the exhalation tank and the pump for drawing sludge are controlled by means of each obtained control output value (310,313) as above said.

2. A method according to claim 1, wherein said attributes of the inflow water include an incoming stream flow, a temperature and BOD of the inflow water;
   the said attributes of the internal condition of the reaction tank include a volume load, sludge retention time, dissolved

oxygen of the 1st storey of the exhalation tank, dissolved oxygen of the 2nd storey of the exhalation tank, MLSS, $NH_4$-N, $NO_3$-N and $PO_4$-P; and
the said attributes of the outflow water quality include BOD of the outflow water (401), a volume and.T-N thereof.

3.  A method according to claim 1 or claim 2, wherein said neural network (403) uses the learning optimization algorithm.

4.  A method according to any one of claims 1 to 3, wherein the input learning data used in the neural network (403) control program are attributes of the inflow water, attributes of the internal condition of the reaction tank and attributes of efficiency of the outflow water quality and that dissolved oxygen of the 1st storey of the exhalation tank, dissolved oxygen of the 2nd storey of the exhalation tank and sludge retention time, which are target data, are obtained by means of the weight acquired in the learning process.

5.  A method according to claim 4, wherein the system of the said neural network (403) control program comprises an input layer (503), a hidden layer (504) and an output layer (505), and that the number of hidden layers (504) is determined in the range of 15 to 40, and that the data input from the input layer (503) to the hidden layer (504), the data output from the hidden layer (504) to the output layer (505) and the weight are determined in the said hidden layer (504).

6.  A method according to claim 5, wherein the information acquired in the learning process is accumulated and saved in the weight by using the linear sum as an active function in the said output layer (505) and further a non-linear function as an active function in the hidden layer(504), and thereby the said weight is used to obtain each optimum set point (306,307) of sludge retention time and dissolved oxygen.

7.  A method according to any one of claims 4 to 6, wherein data for the input learning of the said neural network (403) control program can be inputted in the following range; temperature: 5 degrees above zero 38 degrees above zero, BOD: 0 - 180 mg/l, $NH_4$ : 40 - 150 mg/l, and volume load: any value in the range 0-∞, and that the output data corresponding thereto are outputted in the following range; dissolved oxygen of the 1st storey of the exhalation tank: 2.35 - 4.3 mg/l, dissolved oxygen of the 2nd storey of the exhalation tank: 1.4 - 3.3 mg/l, and sludge retention time: 7.55 - 21.0 days.

8.  A method according to any one of claims 4 to 7, wherein the control system is;
to increase MLSS to decrease F/M when the concentration of the inflow $NH_4$ is increased, and to decrease MLSS to increase F/M when the concentration of the inflow $NH_4$ is decreased;
to decrease MLSS to maintain F/M when BOD of the inflow water is increased and MLSS is also increased, and to decrease a drawing amount of surplus sludge, maintaining F/M when MLSS is decreased; and
to increase the air supply when BOD of the inflow water is increased, and to decrease the air supply and at the same time increase a drawing amount of surplus sludge to decrease MLSS, when the concentration of the inflow water (BOD) is decreased.

9.  A method according to any preceding claim, wherein said method further includes a step in which a set of data obtained in the measuring and operation-processing step is saved and controlled in one file.

10. A method according to claim 9, wherein said method includes a further step in which the said data are communicated bi-directionally with a computer (604) through TCP/IP (603) to control them real time, the efficiency of the sewage/waste water treatment plant completing the said control process is comparatively analysed by using the multi-processing function and the analysis result is recorded in a file.

11. A system for controlling treatment of sewage/waste water in a sewage/waste water treatment plant comprising an exhalation tank in which a neural network (403) control program using a back-propagation algorithm in a computer is applied for deriving a optimum set point value and air in exhalation tank and a sludge drawing pump are controlled, wherein the system comprises:

a measurement means (10,11,12) for measuring present values of attributes of inflow water (304) flowing into the sewage/waste water treatment plant, attributes of internal condition of a reaction tank, and fluid present values of efficiency attributes of outflow water ;
a computing means for collecting and converting the measured present values into physical data to be processed in the computer and obtaining each optimum set point of each dissolved oxygen and sludge retention time of 1st storey and 2nd storey of the exhalation tank by comparing the present values of the measured attributes as above said by means of an application program, and operationally processing each obtained optimum set point to produce analog (310) and digital (313) control output value by comparing each obtained optimum set point (306,307) with each present value of each dissolved oxygen and sludge retention time of the 1st storey and 2nd storey of the exhalation tank, the application program obtaining each said optimum set point (306,307) by means of the neural network (403) control program using the back-propagation algorithm; and

a means for controlling each air control valve of the 1st storey and 2nd storey of the exhalation tank and the pump for drawing sludge by means of each obtained control output value (310,313) as above said.

12. A system for controlling treatment of sewage/waste water according to claim 11, wherein the said attributes of the inflow water include an incoming stream flow, a temperature and BOD of the inflow water;

the said attributes of the internal condition of the reaction tank include a volume load, sludge retention time, dissolved oxygen of the 1st storey of the exhalation tank, dissolved oxygen of the 2nd storey of the exhalation tank, MLSS, $NH_4$-N, $NO_3$-N and $PO_4$-P ; and

the said attributes of the outflow water quality include BOD of the outflow water (401), a volume and T-N thereof.

13. A system for controlling treatment of sewage/waste water according to claim 11 or claim 12, wherein the said neural network (403) uses the learning optimisation algorithm.

14. A system for controlling treatment of sewage/waste water according to any one of claims 11 to 13, wherein the input learning data used in the neural network (403) control program are attributes of the inflow water, attributes of the internal condition of the reaction tank and attributes of efficiency of the outflow water quality and that dissolved oxygen of the 1st storey of the exhalation tank, dissolved oxygen of the 2nd storey of the exhalation tank and sludge retention time, which are target data, are obtained by means of the weight acquired in the learning process.

15. A system for controlling treatment of sewage/waste according to claim 14, wherein the system of the said neural network (403) control program comprises an input layer (503), a hidden layer (504) and an output layer (505), and that the number of hidden layers (504) is determined in the range of 15 to 40, and that the data input from the input layer (503) to the hidden layer (504), the data output from the hidden layer (504) to the output layer (505) and the weight are determined in the said hidden layer(504).

16. A system for controlling treatment of sewage/waste water according to claim 15, wherein the information acquired in the learning process is accumulated and saved in the weight by using the linear sum as an active function in the said output layer (505) and further a non-linear function as an active function in the hidden layer (504), and thereby the said weight is used to obtain each optimum set point (306,307) of sludge retention time and dissolved oxygen.

17. A system for controlling treatment of the sewage/waste water according to any one of claims 14 to 16, wherein the input learning of the said neural network (403) control program can be inputted in the following range; temperature: 5 degrees above zero 38 degrees above zero, BOD: 0 - 180 mg/l, $NH_4$: 0 - 150 mg/l, and volume load: any value in the range 0-m, and that the output data corresponding thereto are outputted in the following range; dissolved oxygen of the 1st storey of the exhalation tank: 2.35 - 4.3 mg/l, dissolved oxygen of the 2nd storey of the exhalation tank: 1.4 - 3.3 mg/l, and sludge retention time: 7.55 - 21.0 days.

18. A system for controlling treatment of sewage/waste water according to any one of claims 14 to 18,wherein the control system is;

to increase MLSS to decrease F/M when the concentration of the inflow $NH_4$ is increased, and to decrease MLSS to increase F/M when the concentration of the inflow $NH_4$ is decreased;

to decrease MLSS to maintain F/M when BOD of the inflow water is increased and MLSS is also increased, and to decrease drawing of surplus sludge, maintaining F/M when MLSS is decreased; and

to increase the air supply when BOD of the inflow water is increased, and to decrease the air supply and at the same time increase the drawing of surplus sludge to decrease MLSS, when the concentration of the inflow water (BOD) is decreased.

19. A system for controlling treatment of sewage/waste water according to any preceding claim, wherein the system is **characterized by** saving and controlling a set of data obtained in the said measuring and operation-processing step.

20. A system for controlling treatment of sewage/waste water according to claim 19, wherein the system is **characterized by** communicating the said data bi-directionally with a computer (604) through TCP/IP (603) to control them real time, analysing comparatively the efficiency of the sewage/waste water treatment plant completing the said control process by using the multi-processing function and recording the analysis result in a file.

**Patentansprüche**

1. Verfahren zur Ab-/Schmutzwasserreinigungssteuerung in einer Ab-/Schmutzwasserreinigungsanlage, die einen Ausströmungstank umfasst, in dem ein Neuronalnetz(403)-Steuerungsprogramm unter Verwendung eines Backpropagationalgorithmus in einem Computer eingesetzt wird, um einen optimalen Sollwert (SP) herzuleiten, wobei Luft im Ausströmungstank und eine Schlammabzugspumpe gesteuert werden, wobei das Verfahren umfasst:

   einen Schritt, bei dem vorliegende Werte von Attributen von in die Ab-/Schmutzwasserreinigungsanlage fließendem Zuflusswasser (304), Attributen eines internen Zustandes eines Reaktionstanks und vorliegende Fluidwerte von Attributen der Güte des Ablaufwassers gemessen werden;
   einen Schritt, bei dem die gemessenen vorliegenden Werte gesammelt und in physische Daten umgewandelt werden, die im Computer verarbeitet werden;
   einen Schritt, bei dem jeder optimale Sollwert von jeweils gelöstem Sauerstoff und Schlammverweilzeit einer 1. Etage und 2. Etage des Ausströmungstanks durch Vergleichen der oben genannten vorliegenden Werte der gemessenen Attribute mittels eines Anwendungsprogramms im Computer erhalten wird, wobei das Anwendungsprogramm jeden optimalen Sollwert (306,307) mittels des Neuronalnetz(403)-Steuerungsprogramms unter Verwendung des Backpropagationalgorithmus erhält;
   einen Schritt, bei dem jeder erhaltene optimale Sollwert operativ verarbeitet wird, um einen analogen (310) und digitalen (313) Steuerungsausgabewert durch Vergleichen jedes erhaltenen optimalen Sollwerts (306,307) mit jedem vorliegenden Wert von jeweils gelöstem Sauerstoff und Schlammverweilzeit der 1. Etage und 2. Etage des Ausströmungstanks zu erzeugen; und
   einen Schritt, bei dem jedes Luftsteuerungsventil der 1. Etage und 2. Etage des Ausströmungstanks und die Schlammsaugpumpe jeweils mittels des oben genannten erhaltenen Steuerungsausgabewertes (310,313) gesteuert werden.

2. Verfahren gemäß Anspruch 1, wobei die Attribute des Zuflusswassers einen eingehenden Strömungsfluss, eine Temperatur und einen biologischen Sauerstoffbedarf (BOD) des Zuflusswassers umfassen;
   die Attribute des internen Zustands des Reaktionstanks eine Volumenbeladung, Schlammverweilzeit, gelösten Sauerstoff der 1. Etage des Ausströmungstanks, gelösten Sauerstoff der 2. Etage des Ausströmungstanks, MLSS, $NH_4$-N, $NO_3$-N und $PO_4$-P umfassen; und
   die Attribute der Ablaufwasserqualität den BOD des Ablaufwassers (401), ein Volumen und dessen Gesamtstickstoff (T-N) umfassen.

3. Verfahren gemäß Anspruch 1 oder Anspruch 2, wobei das Neuronalnetz(403) den lernenden Optimierungsalgorithmus verwendet.

4. Verfahren gemäß einem der Ansprüche 1 bis 3, wobei die im Neuronalnetz(403)-Steuerungsprogramm verwendeten Eingabelerndaten Attribute des Zuflusswassers, Attribute des internen Zustands des Reaktionstanks und Attribute der Güte der Ablaufwasserqualität sind, und wobei gelöster Sauerstoff der 1. Etage des Ausströmungstanks, gelöster Sauerstoff der 2. Etage des Ausströmungstanks und die Schlammverweilzeit, welche Solldaten sind, mittels des im Lernprozess erworbenen Gewichts erhalten werden.

5. Verfahren gemäß Anspruch 4, wobei das System des auf einem Neuronalnetz(403)-Steuerungsprogramms eine Eingabeschicht (503), eine versteckte Schicht (504) und eine Ausgabeschicht (505) umfasst, und wobei die Anzahl versteckter Schichten (504) im Bereich von 15 bis 40 festgelegt wird, und wobei die Dateneingabe von der Eingabeschicht (503) zur versteckten Schicht (504), die Datenausgabe von der versteckten Schicht (504) zur Ausgabeschicht (505) und das Gewicht in der versteckten Schicht (504) bestimmt werden.

6. Verfahren gemäß Anspruch 5, wobei die im Lernprozess erworbene Information akkumuliert und im Gewicht gespeichert wird unter Verwendung der linearen Summe als einer aktiven Funktion in der Ausgabeschicht (505) und ferner einer nicht-linearen Funktion als einer aktiven Funktion in der versteckten Schicht (504), und dabei das Gewicht verwendet wird, um jeden optimalen Sollwert (306,307) von Schlammverweilzeit und gelöstem Sauerstoff zu erhalten.

7. Verfahren gemäß einem der Ansprüche 4 bis 6, wobei Daten für das Eingabelernen des Neuronalnetz(403)-Steuerungsprogramms im folgenden Bereich eingegeben werden kann; Temperatur: 5 Grad über Null - 38 Grad über Null, BOD: 0 - 180 mg/l, $NH_4$ : 40 - 150 mg/l und Volumen: beliebiger Wert im Bereich 0 - ∞, und dass die dazu gehörenden Ausgabedaten im folgenden Bereich ausgegeben werden; gelöster Sauerstoff der 1. Etage des Ausströmungstanks: 2.35 - 4.3 mg/l, gelöster Sauerstoff der 2. Etage des Ausströmungstanks: 1.4 - 3.3 mg/l, und Schlammverweilzeit: 7.55 - 21.0 Tage.

**8.** Verfahren gemäß einem der Ansprüche 4 bis 7, wobei das Steuerungssystem dazu dient,
MLSS zu erhöhen, um F/M zu verringern, wenn die Konzentration des $NH_4$-Zuflusses erhöht wird, und um MLSS zu verringern, um F/M zu erhöhen, wenn die Konzentration des $NH_4$-Zuflusses verringert wird;
MLSS zu verringern, um F/M aufrechtzuerhalten, wenn der BOD des Zuflusswassers erhöht wird und MLSS auch erhöht wird, und um eine Abzugsmenge von Überschussschlamm zu verringern, wobei F/M aufrechterhalten wird, wenn MLSS verringert wird; und
die Luftzufuhr zu erhöhen, wenn der BOD des Zuflusswassers erhöht wird, und um die Luftzufuhr zu verringern und um gleichzeitig eine Abzugsmenge von Überschussschlamm zu erhöhen, um MLSS zu verringern, wenn die Konzentration des Zuflusswassers (BOD) verringert wird.

**9.** Verfahren gemäß einem der vorherigen Ansprüche, wobei das Verfahren weiter einen Schritt umfasst, bei dem eine beim Messschritt und operativ-verarbeitenden Schritt erhaltene Datenmenge in einer Datei gespeichert und gesteuert wird.

**10.** Verfahren gemäß Anspruch 9, wobei das Verfahren einen weiteren Schritt umfasst, bei dem die Daten bidirektional mit einem Computer (604) über TCP/IP (603) kommuniziert werden, um sie in Echtzeit zu steuern, wobei die Güte der Ab-/ Schmutzwasserreinigungsanlage, die den Steuerungsprozess ausführt, unter Verwendung der Multiprozessorfunktion vergleichend analysiert wird und das Analyseergebnis in einer Datei gespeichert wird.

**11.** System zur Ab-/Schmutzwasserreinigungsteuerung in einer Ab-/Schmutzwasserreinigungsanlage, die einen Ausströmungstank umfasst, in dem ein auf einem Neuronalnetz(403)-Steuerungsprogramm unter Verwendung eines Backpropagationalgorithmus in einem Computer eingesetzt wird, um einen optimalen Sollwert herzuleiten, und Luft im Ausströmungstank und eine Schlammabzugspumpe gesteuert werden, wobei das System umfasst:

ein Messmittel (10,11,12) zum Messen vorliegender Attributwerte von in die Ab-/Schmutzwasserreinigungsanlage fließendem Zuflusswasser (304), von Attributen eines internen Zustandes eines Reaktionstanks, und vorliegender Fluidwerte von Attributen der Güte von Ablaufwasser;
ein Berechnungsmittel zum Sammeln und Umwandeln der gemessenen vorliegenden Werte in physische Daten, die im Computer verarbeitet werden und Erhalten jedes optimalen Sollwerts von jeweils gelöstem Sauerstoff und Schlammverweilzeit einer 1. Etage und 2. Etage des Ausströmungstanks durch Vergleichen der oben genannten vorliegenden Werte der gemessenen Attribute mittels eines Anwendungsprogramms, und operativen Verarbeiten jedes erhaltenen optimalen Sollwerts, um analoge (310) und digitale (313) Steuerausgabewerte zu erzeugen durch Vergleichen jedes optimalen Sollwerts (306,307) mit jedem vorliegenden Wert von jeweils gelöstem Sauerstoff und Schlammverweilzeit der 1. Etage und 2. Etage des Ausströmungstankes, wobei das Anwendungsprogramm jeden optimalen Sollwert (306,307) mittels des Neuronalnetz(403)-Steuerungsprogramms unter Verwendung des Backpropagationsalgorithmus erhält; und
ein Mittel zum Steuern jedes Luftsteuerungsventils der 1. Etage und 2. Etage des Ausströmungstanks und der Schlammabzugspumpe mittels jedes oben genannten erhaltenen Steuerausgabewertes (310,313).

**12.** System zur Ab-/Schmutzwasserreinigungsteuerung gemäß Anspruch 11, wobei die Attribute des Zuflusswassers einen eingehenden Abfluss, eine Temperatur und den BOD des Zuflusswassers umfassen;
die Attribute des internen Zustands des Reaktionstanks eine Volumenbeladung, Schlammverweilzeit, gelösten Sauerstoff der 1. Etage des Ausströmungstanks, gelösten Sauerstoff der 2. Etage des Ausströmungstanks, MLSS, $NH_4$-N, $NO_3$-N und $PO_4$-P umfassen; und
die Attribute der Ablaufwasserqualität den BOD des Ablaufwassers (401), ein Volumen und dessen T-N umfassen.

**13.** System zur Ab-/Schmutzwasserreinigungsteuerung gemäß Anspruch 11 oder Anspruch 12, wobei das Neuronalnetz (403) den lernenden Optimierungsalgorithmus verwendet.

**14.** System zur Ab-/Schmutzwasserreinigungsteuerung gemäß einem der Ansprüche 11 bis 13, wobei die im Neuronalnetz(403)-Steuerungsprogramm verwendeten Eingabelerndaten Attribute des Zuflusswassers, Attribute des internen Zustands des Reaktionstanks und Attribute der Güte der Ablaufwasserqualität sind, und wobei gelöster Sauerstoff der 1. Etage des Ausströmungstanks, gelöster Sauerstoff der 2. Etage des Ausströmungstanks und Schlammverweilzeit, die Solldaten sind, mittels des im Lernprozess erworbenen Gewichts erhalten werden.

**15.** System zur Ab-/Schmutzwasserreinigungssteuerung gemäß Anspruch 14, wobei das System des auf einem Neuronalnetz(403)-Steuerungsprogramms eine Eingabeschicht (503), eine versteckte Schicht (504) und eine Ausgabeschicht (505) umfasst, und wobei die Anzahl versteckter Schichten (504) im Bereich von 15 bis 40 festgelegt wird, und wobei die Dateneingabe von der Eingabeschicht (503) zur versteckten Schicht (504), die Datenausgabe von der versteckten Schicht (504) zur Ausgabeschicht (505) und das Gewicht in der versteckten Schicht (504) bestimmt werden.

**16.** System zur Ab-/Schmutzwasserreinigungssteuerung gemäß Anspruch 15, wobei die im Lernprozess erworbene Information akkumuliert wird und im Gewicht gespeichert wird unter Verwendung der linearen Summe als einer aktiven Funktion in der Ausgabeschicht (505) und ferner einer nicht-linearen Funktion als einer aktiven Funktion in der versteckten Schicht (504) und dabei das Gewicht verwendet wird, um jeden optimalen Sollwert (306,307) von Schlammverweilzeit und gelöstem Sauerstoff zu erhalten.

**17.** System zur Ab-/Schmutzwasserreinigungssteuerung gemäß Anspruch 14 bis 16, wobei das Eingabelernen des Neuronalnetz(403)-Steuerungsprogramm im folgenden Bereich eingegeben werden kann; Temperatur: 5 Grad über Null - 38 Grad über Null, BOD: 0 - 180 mg/l, $NH_4$: 0 - 150 mg/l und Volumenbeladung: beliebiger Wert im Bereich 0 - ∞, und dass die dazu gehörenden Ausgabedaten im folgenden Bereich ausgegeben werden; gelöster Sauerstoff der 1. Etage des Ausströmungstanks: 2.35 - 4.3 mg/l, gelöster Sauerstoff der 2. Etage des Ausströmungstanks: 1.4 - 3.3 mg/l, und Schlammverweilzeit: 7.55 - 21.0 Tage.

**18.** System zur Ab-/Schmutzwasserreinigungssteuerung gemäß Anspruch 14 bis 18, wobei das Steuerungssystem dazu dient,
MLSS zu erhöhen, um F/M zu verringern, wenn die Konzentration des $NH_4$-Zuflusses erhöht wird und um MLSS zu verringern, um F/M zu erhöhen, wenn die Konzentration des $NH_4$-Zuflusses verringert wird;
MLSS zu verringern, um F/M aufrechtzuerhalten, wenn der BOD des Zuflusswassers erhöht wird und MLSS auch erhöht wird, und um den Abzug von Überschussschlamm zu verringern, wobei F/M aufrechterhalten wird, wenn MLSS verringert wird; und
die Luftzufuhr zu erhöhen, wenn der BOD des Zuflusswassers erhöht wird, und um die Luftzufuhr zu verringern und gleichzeitig das Saugen von Überschussschlamm zu erhöhen, um MLSS zu verringern, wenn die Konzentration des Zuflusswassers (BOD) verringert wird.

**19.** System zur Ab-/Schmutzwasserreinigungssteuerung gemäß einem der vorherigen Ansprüche, wobei das Verfahren durch Speichern und Steuern einer beim Messschritt und operativ-verarbeitenden Schritt erhaltenen Datenmenge **gekennzeichnet** ist.

**20.** System zur Ab-/Schmutzwasserreinigungssteuerung gemäß Anspruch 19, wobei das Verfahren **gekennzeichnet ist durch** bidirektionales Kommunizieren der Daten mit einem Computer (604) über TCP/IP (603), um sie in Echtzeit zu steuern, vergleichendes Analysieren der Güte der Ab-/Schmutzwasserreinigungsanlage, wobei der Steuerungsprozess **durch** Verwenden der Multiprozessorfunktion und Speichern des Analyseergebnisses in einer Datei vervollständigt wird.

## Revendications

**1.** Procédé de contrôle de traitement d'eaux usées dans une installation de traitement d'eaux usées comprenant un réservoir de rejet, dans lequel un programme de contrôle à réseau neuronal (403) utilisant un algorithme à rétropropagation dans un ordinateur est appliqué pour fournir une valeur de point de réglage optimal (SP), l'air dans le réservoir de rejet et une pompe d'extraction de boue étant contrôlés, ce procédé comprenant :

une étape dans laquelle on mesure les valeurs présentes des attributs de l'eau entrante (304) circulant dans l'installation de traitement d'eaux usées, les attributs de l'état interne d'un réservoir de réaction et les valeurs courantes du fluide d'attributs de rendement de l'eau de sortie ;
une étape dans laquelle les valeurs présentes mesurées sont recueillies et converties en données physiques à traiter dans l'ordinateur ;
une étape dans laquelle chaque point de réglage optimal de chaque oxygène dissous et durée de rétention de boue du premier étage et du deuxième étage du réservoir de rejet est obtenu en comparant les valeurs présentes des attributs mesurés de la façon ci-dessus au moyen d'un programme d'application dans l'ordinateur, le programme d'application fournissant le point de réglage optimal (306, 307) au moyen du programme de commande à réseau neuronal (403) en utilisant l'algorithme à rétropropagation ;

une étape dans laquelle chaque point de réglage optimal obtenu est traité de façon opérationnelle pour produire une valeur de sortie de commande analogique (310) et numérique (313) en comparant chaque point de réglage optimal (306, 307) à chaque valeur présente de chacun de l'oxygène dissous et de la durée de rétention de boue du premier étage et du deuxième étage du réservoir de rejet ; et

une étape dans laquelle chacune des vannes de commande d'air du premier étage et du deuxième étage du réservoir de rejet et de la pompe d'extraction de boue est commandée au moyen de chaque valeur de sortie de commande obtenue (310, 313) de la façon ci-dessus.

2. Procédé selon la revendication 1, dans lequel :

les attributs de l'eau entrante incluent un débit entrant, une température et une demande en oxygène biologique, ou BOD, de l'eau entrante ;

les attributs de l'état interne du réservoir de réaction incluent une charge en volume, une durée de rétention de boue, l'oxygène dissous du premier étage du réservoir de rejet, l'oxygène dissous du deuxième étage du réservoir de rejet, la quantité de solide suspendue en mélange dans une liqueur ou MLSS, $NH_4$-N, $NO_3$-N et $PO_4$-P ; et

lesdits attributs de la qualité d'eau de sortie incluent le BOD de l'eau de sortie (401) son volume et sa quantité totale d'azote, ou T-N.

3. Procédé selon la revendication 1 ou 2, dans lequel le réseau neuronal (403) utilise un algorithme d'optimisation à apprentissage.

4. Procédé selon l'une quelconque des revendications 1 à 3, dans lequel les données d'apprentissage d'entrée utilisées dans le programme de commande à réseau neuronal (403) sont des attributs d'eau d'entrée, des attributs de l'état interne du réservoir de réaction et des attributs de coefficient de qualité d'eau de sortie et de l'oxygène dissous du premier étage du réservoir de rejet, de l'oxygène dissous du deuxième étage du réservoir de rejet et de la durée de rétention qui sont des données cibles, sont obtenues au moyen de la pondération acquise lors du processus d'apprentissage.

5. Procédé selon la revendication 4, dans lequel le système du programme de commande à réseau neuronal (403) comprend une couche d'entrée (503), une couche cachée (504) et une couche de sortie (505), et dans lequel le nombre de couches cachées (504) est déterminé dans la plage de 15 à 40, et l'entrée de données à partir de la couche d'entrée (503) vers la couche cachée (504), la sortie de données de la couche cachée (504) à la couche de sortie (505) et la pondération sont déterminées dans la couche cachée (504).

6. Procédé selon la revendication 5, dans lequel les informations acquises lors du processus d'apprentissage sont accumulées et sauvegardées dans la pondération en utilisant la somme linéaire en tant que fonction active dans la couche de sortie (505) et en outre une fonction linéaire en tant que fonction active dans la couchée (504), et ainsi la pondération est utilisée pour obtenir chaque point de réglage optimal (306, 307) de la durée de rétention de boue et de l'oxygène dissous.

7. Procédé selon l'une quelconque des revendications 4 à 6, dans lequel les données pour l'apprentissage d'entrée du programme de commande à réseau neuronal (403) peuvent être introduites dans les plages suivantes : température : 5 à 38 degrés au dessus de zéro, BOD : 0-180 mg/l, $NH_4$:40-150 mg/l, et charge volumique : toute valeur dans la plage de 0-∞, et dans lequel les données de sortie correspondantes sont fournies dans la plage suivante : oxygène dissous du premier étage du réservoir de rejet 2,35 à 4,3 mg/l, oxygène dissous du deuxième étage du réservoir de rejet 1,4 à 3,3 mg/l, et durée de rétention de boue 7,55 à 21 jours.

8. Procédé selon l'une quelconque des revendications 4 à 7, dans lequel le système de commande est prévu pour :

augmenter MLSS pour diminuer F/M quand la concentration en $NH_4$ d'entrée est augmentée et pour diminuer MLSS et augmenter F/M quand la concentration en $NH_4$ d'entrée est réduite ;

diminuer MLSS pour maintenir F/M quand le BOD de l'eau d'entrée est augmenté et le MLSS est également augmenté, et pour diminuer une quantité de soutirage de boue en excès, en maintenant F/M quand MLSS est réduit ; et

augmenter la fourniture d'air quand le BOD de l'eau d'entrée est augmenté et diminuer la fourniture d'air et en même temps augmenter une quantité de soutirage de boue en excès pour réduire MLSS quand la concentration de l'eau d'entrée (BOD) est diminuée.

9. Procédé selon l'une quelconque des revendications précédentes, comprenant en outre une étape dans laquelle un ensemble de données obtenu pour la mesure de l'étape d'opération-traitement est sauvegardé et commandé dans un fichier.

10. Procédé selon la revendication 9, comprenant une autre étape dans laquelle lesdites données sont communiquées de façon bidirectionnelle à un ordinateur (604) par l'intermédiaire de TCP/IP (603) pour les commander en temps réel, l'efficacité de l'installation de traitement d'eaux usées résultant du processus de commande est analysée de façon comparative en utilisant la fonction à multitraitement, et le résultat d'analyse est enregistré dans un fichier.

11. Système de contrôle de traitement d'eaux usées dans une installation de traitement d'eaux usées, comprenant un réservoir de rejet dans lequel un programme de commande à réseau neuronal (403) utilisant un algorithme à rétropropagation dans un ordinateur est appliqué pour fournir une valeur de point de réglage optimal, et l'air dans le réservoir de rejet et une pompe d'extraction de boue sont contrôlés, dans lequel le système comprend :

un moyen de mesure (10, 11, 12) pour mesurer les valeurs présentes des attributs de l'eau entrante (304) circulant dans l'installation de traitement d'eaux usées, les attributs de l'état interne d'un réservoir de réaction et les valeurs courantes du fluide d'attributs de rendement de l'eau de sortie ;

un moyen de calcul pour recueillir et convertir les valeurs mesurées présentes en données physiques à traiter dans l'ordinateur et pour fournir chaque point de réglage optimal de chaque oxygène dissous et durée de rétention de boue du premier étage et du deuxième étage du réservoir de rejet en comparant les valeurs présentes des attributs mesurés de la façon ci-dessus au moyen d'un programme d'application et de traitement de façon opérationnelle de chaque point de réglage optimal obtenu pour produire une valeur de sortie de commande analogique (310) et numérique (313) en comparant chaque point de réglage optimal obtenu (306, 307) à chaque valeur courante de chaque oxygène dissous et durée de rétention de boue du premier étage et du deuxième étage du réservoir de rejet du programme d'application fournissant le point de réglage optimal (306, 307) au moyen du programme de commande à réseau neuronal (403) en utilisant l'algorithme à rétropropagation ; et

un moyen pour commander chacune des vannes de commande d'air du premier étage et du deuxième étage du réservoir de rejet et de la pompe d'extraction de boue au moyen de chaque valeur de sortie de commande obtenue (310, 313) de la façon ci-dessus.

12. Système de contrôle de traitement d'eaux usées selon la revendication 11, dans lequel :

les attributs de l'eau entrante incluent un débit entrant, une température et une demande en oxygène biologique ou BOD de l'eau entrante ;

les attributs de l'état interne du réservoir de réaction incluent une charge en volume, une durée de rétention de boue, l'oxygène dissous du premier étage du réservoir de rejet, l'oxygène dissous du deuxième étage du réservoir de rejet, la quantité de solide suspendue en mélange dans une liqueur, ou MLSS, $NH_4$-N, $NO_3$- et $PO_4$-P et

lesdits attributs de la qualité d'eau de sortie incluent le BOD de l'eau de sortie (401) son volume et son T-N.

13. Système de contrôle de traitement d'eaux usées selon la revendication 11 ou 12, dans lequel le réseau neuronal (403) utilise un algorithme d'optimisation à apprentissage.

14. Système de contrôle de traitement d'eaux usées selon l'une quelconque des revendications 11 à 13, dans lequel les données d'apprentissage d'entrée utilisées dans le programme de commande à réseau neuronal (403) sont des attributs d'eau d'entrée, des attributs de l'état interne du réservoir de réaction et des attributs de coefficient de qualité d'eau de sortie et de l'oxygène dissous du premier étage du réservoir de rejet, de l'oxygène dissous du deuxième étage du réservoir de rejet et de la durée de rétention qui sont des données cibles, sont obtenues au moyen de la pondération acquise lors du processus d'apprentissage.

15. Système de contrôle de traitement d'eaux usées selon la revendication 14, dans lequel le système du programme de commande à réseau neuronal (403) comprend une couche d'entrée (503), une couche cachée (504) et une couche de sortie (505) et dans lequel le nombre de couches cachées (504) est déterminé dans la plage de 15 à 40, et l'entrée de données à partir de l'entrée de données vers la couche cachée (504), la sortie de données (503) de la couche cachée (504) à la couche de sortie (505) et la pondération sont déterminées dans la couche cachée (504).

16. Système de contrôle de traitement d'eaux usées selon la revendication 15, dans lequel les informations acquises lors du processus d'apprentissage sont accumulées et sauvegardées dans la pondération en utilisant la somme linéaire en tant que fonction active dans la couche de sortie (505) et en outre une fonction linéaire en tant que fonction active dans la couchée (504), et ainsi la pondération est utilisée pour obtenir chaque point de réglage optimal (306, 307) de la durée de rétention de boue et de l'oxygène dissous.

17. Système de contrôle de traitement d'eaux usées selon l'une quelconque des revendications 14 à 16, dans lequel les données pour l'apprentissage d'entrée du programme de commande à réseau neuronal (403) peuvent être introduites dans les plages suivantes : température : 5 à 38 degrés au-dessus de zéro, BOD : 0-180 mg/l , $NH_4$ : 0-150 mg/l, et charge volumique : toute valeur dans la plage de 0-∞, et dans lequel les données de sortie correspondante sont fournies dans la plage suivante : oxygène dissous du premier étage du réservoir de rejet 2,35 à 4,3 mg/l, oxygène dissous du deuxième étage du réservoir de rejet 1,4-3,3 mg/l, et durée de rétention de boue 7,55 à 21 jours.

18. Système de contrôle de traitement d'eaux usées selon l'une quelconque des revendications 14 à 17, dans lequel le système de commande est prévu pour :

augmenter MLSS pour diminuer F/M quand la concentration du $NH_4$ d'entrée est augmentée et pour diminuer MLSS et augmenter F/M quand la concentration du $NH_4$ d'entrée est réduite ;
diminuer MLSS pour maintenir F/M quand le BOD de l'eau d'entrée est augmenté et le MLSS est également augmenté, et pour diminuer une quantité de soutirage de boue en excès, en maintenant F/M quand MLSS est réduit ; et
augmenter la fourniture d'air quand le BOD de l'eau d'entrée est augmenté et diminuer la fourniture d'air et en même temps augmenter une quantité de soutirage de boue en excès pour réduire MLSS quand la concentration de l'eau d'entrée (BOD) est diminuée.

19. Système de contrôle de traitement d'eaux usées selon l'une quelconque des revendications précédentes, dans lequel le système est **caractérisé par** une sauvegarde et un contrôle d'un ensemble de données obtenu lors de l'étape de mesure et de traitement opérationnelle.

20. Système de contrôle de traitement d'eaux usées selon la revendication 19, **caractérisé par** une communication des données de façon bidirectionnelle par un ordinateur (604) par l'intermédiaire de TCP/IP (603) pour les commander en temps réel, l'efficacité de l'installation de traitement d'eaux usées résultant du processus de commande est analysée de façon comparative en utilisant la fonction à multitraitement et en enregistrant le résultat d'analyse dans un fichier.

[Figure 1]

**10 — Efficiency of Outflow Water**
- Outflow BOD
- Outflow Flow Meter

**11 — Internal Condition of Reaction Tank**
- Sludge Flow Meter
- Sludge Densitometer
- MLSS Densitometer
- DO Meter, 2nd Story of Exhalation Tank
- DO Meter, 1st Story of Exhalation Tank

**12 — Attributes of Inflow Water**
- Inflow BOD
- Thermometer
- Incoming Stream Flow

**13 — Central Computer**
- 110 — Central Processing Unit (Conversion into a Physical Quantity)
- 108 — Display Unit
- 109 — Recording Unit
- 107 — Interface

**106 — R6-232C Communication**

**14 — Programmable Logic Controller (PLC)**
- 105 — Interface
- 101 — A/D Card
- 102 — Central Processing Unit (Simple Operation)
- 103 — Digital Card
- 104 — D/A Card

**15 — Digital Signals**
- Inverter for Controlling Sludge Pump

**17 — Sludge Pump**

**16 — Analog Signals**
- Air Control Valve, 2nd Story of Exhalation Tank
- Air Control Valve, 1st Story of Exhalation Tank

【Figure 2】

```
┌──────────────┐              ┌──────────────┐
│Keyboard Input│─────────────>│ Program Start│
└──────────────┘              └──────────────┘
                                     │
                              ┌──────────────┐
                              │Initialization│  201
                              └──────────────┘
                                     │
                              /Data Collection/  202
                                     │
                              /Data Filtering/  203
                                     │
    205
┌─────────────────────────┐
│Attributes of Inflow Water│
│Condition of Reaction Tank│──>┌──────────────────────────────┐
│Attributes of Outflow Water│   │Identification of Present Condition│  204
└─────────────────────────┘    └──────────────────────────────┘
                                     │
    206                         207  ▼                              208
┌─────────────────────┐  ┌──────────────────────────┐  ┌────────────────────┐
│SP Input (Keyboard Input)│─>│Operation of Control Output│──>│Digital Control Output│
└─────────────────────┘  └──────────────────────────┘  └────────────────────┘
                          ┌───── Analog ─────┘  └──── Digital ────┐
┌────────────────────┐  ┌────────────────────────┐  ┌────────────────────────┐  ┌────────────────────┐
│Analog Control Output│<─│Operation of Analog Output│  │Operation of Digital Output│─>│Digital Control Output│
└────────────────────┘  └────────────────────────┘  └────────────────────────┘  └────────────────────┘
      209                     210                           211                        212
                          └──── Analog ────┐  ┌──── Digital ────┘
                                    ┌──────────────┐
                                    │    (PLC)     │  213
                                    │Memory Storage│
                                    └──────────────┘
                                           │
                          <Efficiency Judgment>──── Unconformity ───>┌──────────────────┐
                                           │                          │Alarm Transmission│
                                    ·Conformity  214                 └──────────────────┘
                                           │                              215
                          ┌──────────────────────┐
                          │RS-232C Communication │  216
                          └──────────────────────┘
                                           │
                    ┌────────────────────────────────┐
                    │Conversion into a Physical Quantity│  217
                    └────────────────────────────────┘
                                           │
                                    ┌──────────────┐
                                    │  (Computer)  │  218
                                    │Memory Storage│
                                    └──────────────┘
          ┌────────────────────────────┼────────────────────────────┐
    219 (Saving Initial Value)    (Display on Screen)         (Saving Dates and Text)
                                           │  220                    221
┌──────────────┐                           │
│Keyboard Input│──────────────────────────┤
└──────────────┘                           │
      222                                  │
                                    ( Program End )
                                        223
```

【Figure 3】

Keyboard Input → Program Start

Initialization — 301

Reading Initial Value — 302

Data Collection — 303

304 Attributes of Inflow Water → Complex Comparative Operation — 305

Analog

Digital

305 Optimum DO SP

Optimum SRT — 307

Complex Comparative Operation — 308

Complex Comparative Operation — 309

Analog Control Output — 310

Operation of Analog Output — 311

Operation of Digital Output — 312

Digital Control Output — 313

Analog

Digital

Memory Storage — 314

Internet Transmission — 315

Saving Initial Value — 316

Display on Screen — 317

Saving Dates and Text — 318

Database — 319

Keyboard Input — 320

Program End — 321

18

**EP 1 376 276 B1**

【Figure 4】

Collection of Existing Expertise
(Inflow Water: BOD, Temperature
Reaction Tank: DO, MLSS
Design Factor: SRT / Treated Water : T-N, BOD)

(1)  Input Factor
(2)  Output Factor

AI Control

Acquisition of Existing Data          401

Making Data Rules by Analysis          402

Learning by Neural Network          403

Re-rearning  Re-rearning
408          409

Real Time Operation by a Remote
Automatic Control System          404

Collection of New Data by
Operation Efficiency          405

407
Operation Efficiency as wanted

N          Y

Building-up of New Database by
Long-term Learning

【Figure 5】

Hidden Layers (504)
(15 ~ 40 Layers)

Learning Data
(501)          Input Layers (503)

Target Data
(502)

Output Layers (505)

NH3 Concentration

Temperature

BOD

Volume Load

SRT

DO 1

DO 2

19

【Figure 6】

603

| Remote Control and Monitoring by TCP/IP |

601         Stream Flow        602        604

| Sensor and Measured Data | Inflow BOD<br>Inflow NH3<br>Temperature | → | Data Collection Board | ⇒ | PC<br>AI Neural Network Controller<br><br>SRT |

DO        Waste Sludge Amount<br>(MLSS)

607        606        605

| DO, MLSS | — | Converter and Inverter | — | Analog Signals Output Board |

20

**[Figure 7]**

```
#include <analysis.h>

#define ii_n (Nout+Nhid*Nout+Nhid*Nin+Nhid)

double input[Nin][SAMPLE];
double target[Nout][SAMPLE];
                              ....
double a1[Nhid][SAMPLE],a2[Nout][SAMPLE];
double err[Nout][SAMPLE], new_err[Nout][SAMPLE];
double ext_p[Nin][Nout*SAMPLE];
double JJ[ii_n][ii_n], ii[ii_n][ii_n], JE[ii_n], dx[ii_n];
double temp[Nhid][SAMPLE*Nout];
double tempj1_1[SAMPLE*Nout][Nhid*Nin];
double tempj2_1[SAMPLE*Nout][Nhid*Nout];
double j1[SAMPLE*Nout][Nhid*Nin], j2[SAMPLE*Nout][Nhid*Nout];
                              ....
void jacobian()
{
 int i,j,k, sum;
 double fsum;
                              ....
//  ext_a1=nncpyi(a1,s2);
//      where, a1 = Nhid x SAMPLE  s2 =Nout     ext_a1 : Nhid x (NoutxSAMPLE)
 for(i=0; i<Nhid; i++)
        for(j=0; j<SAMPLE; j++)
                      for(k=0; k<Nout; k++)
                             ext_a1[i][k+j*Nout]=a1[i][j];
                              ....
// return err2sum;
}
                              ....
 for(i=0; i<s1; i++)
        for(j=0; j<r; j++)
      w[i][j]=2.*w[i][j]/rng[j];
                              ....
 for(j=0; j<SAMPLE; j++)
        for(i=0; i<Nin; i++) {
```

[FIGURE 8]

| Temperature | BOD | NH4-N | Volume Load | DO1 | DO2 | SRT |
|---|---|---|---|---|---|---|
| 5 | | | | 4.03 | 3.03 | 18.1 |
| 6 | | | | 3.95 | 2.95 | 17.9 |
| 7 | | | | 3.90 | 2.90 | 17.5 |
| 8 | | | | 3.85 | 2.85 | 17.2 |
| 9 | | | | 3.80 | 2.80 | 16.8 |
| 10 | | | | 3.75 | 2.75 | 16.5 |
| 11 | | | | 3.70 | 2.70 | 16.1 |
| 12 | | | | 3.65 | 2.65 | 15.8 |
| 13 | | | | 3.60 | 2.60 | 15.4 |
| 14 | | | | 3.55 | 2.55 | 15.1 |
| 15 | 1~180 | 0~150 | 0 ~∞ | 3.50 | 2.50 | 14.7 |
| 16 | | | | 3.45 | 2.45 | 14.4 |
| 17 | | | | 3.40 | 2.40 | 14.0 |
| 18 | | | | 3.35 | 2.35 | 13.7 |
| 19 | | | | 3.30 | 2.30 | 13.3 |
| 20 | | | | 3.25 | 2.25 | 13.0 |
| 21 | | | | 3.20 | 2.20 | 12.6 |
| 22 | | | | 3.15 | 2.15 | 12.3 |
| 23 | | | | 3.10 | 2.10 | 11.9 |
| 24 | | | | 3.05 | 2.05 | 11.6 |
| 25 | | | | 3.00 | 2.00 | 11.2 |
| 26 | | | | 2.95 | 1.95 | 10.9 |
| 27 | | | | 2.90 | 1.90 | 10.5 |
| 28 | | | | 2.85 | 1.85 | 10.2 |
| 29 | | | | 2.80 | 1.80 | 9.8 |
| 30 | | | | 2.75 | 1.75 | 9.5 |
| 31 | | | | 2.70 | 1.70 | 9.1 |
| 32 | | | | 2.65 | 1.65 | 8.8 |
| ... | | | | ... | ... | ... |
| 38 | | | | 2.60 | 1.60 | 8.4 |

# FIG. 9

EP 1 376 276 B1

# FIG. 10

## FIG. 11

EP 1 376 276 B1

# FIG. 12

EP 1 376 276 B1

# FIG. 13

AMPLITUDE

TIME

EP 1 376 276 B1

# FIG. 14

# FIG. 15

EP 1 376 276 B1

# FIG. 16

EP 1 376 276 B1